# EUROPÄISCHE PATENTANMELDUNG

(11) **EP 4 296 804 A1**
(43) Veröffentlichungstag der Anmeldung: **27.12.2023**
(21) Anmeldenummer: 23180391.7
(22) Anmeldetag: 20.06.2023
(51) Int. Cl.: G05B 19/042

(54) **VERFAHREN ZUM KONFIGURIEREN EINER ANZAHL VON VORRICHTUNGEN ZU EINER FUNKTIONSEINHEIT**

(30) Priorität: 20.06.2022 LU 102970
(71) Anmelder: Stöger Automation GmbH, 82549 Königsdorf (DE)
(72) Erfinder: Merk, Ralf, 82549 Königsdorf (DE)
(74) Vertreter: Paustian & Partner Patentanwälte mbB

(57) **Zusammenfassung**

Verfahren zum Konfigurieren einer Anzahl von Vorrichtungen (11, 12, 13, 14, 15, 16) zu einer Funktionseinheit (10), wobei die Vorrichtungen (11, 12, 13, 14, 15, 16) vorgesehen sind, zumindest teilweise parallel und/ oder aufeinanderfolgend Teilaufgaben zum Verbinden von Bauteilen (20) auszuführen. In einem ersten Schritt erfolgt eine Auswahl der für eine Ausführung der Teilaufgaben der Funktionseinheit (10) erforderlichen Vorrichtungen (11, 12, 13, 14, 15, 16) und in einem weiteren Schritt ein mechanisches Anordnen der Vorrichtungen (11, 12, 13, 14, 15, 16) der Funktionseinheit (10) abhängig von der Aufgabe der Funktionseinheit (10).

## Beschreibung

Die vorliegende Erfindung betrifft ein Verfahren zum Konfigurieren einer Anzahl von Vorrichtungen zu einer Funktionseinheit, wobei die Vorrichtungen vorgesehen sind, zumindest teilweise parallel und/ oder aufeinanderfolgend Teilaufgaben zum Verbinden von Bauteilen auszuführen. Ferner betrifft die Erfindung eine Funktionseinheit mit mehreren Vorrichtungen zum Ausführen von Teilaufgaben zum Verbinden von Bauteilen.

Funktionseinheiten zum Verbinden von Bauteilen weisen häufig mehrere Vorrichtungen auf, welche jeweils Teilaufgaben zum Verbinden von Bauteilen auszuführen. Solche Funktionseinheiten sowie Verfahren zum Konfigurieren einer Anzahl von Vorrichtungen zu einer solchen Funktionseinheit sind bekannt. Nachteilig an den bekannten Funktionseinheiten sind wenig flexible Konfigurationsmöglichkeiten bezüglich Auswahl und Funktionsablauf der Vorrichtungen, welche Teilaufgaben zum Verbinden von Bauteilen ausführen. So erfolgt das signaltechnische Verbinden der Vorrichtungen üblicherweise im Zuge der Konfigurierung der Funktionseinheit beim Hersteller, welcher die einzelnen Vorrichtungen mittels der Steuereinrichtung signaltechnisch über deren meist unterschiedlich ausgestalteten Schnittstellen verbindet. Ein späteres Anpassen des Funktionsablaufs der Vorrichtungen der Funktionseinheiten insbesondere beim Kunden ist nicht vorgesehen bzw. geht mit einem aufwändigen Konfigurationsprozess einschließlich einer ebenso aufwändigen Anpassung der signaltechnischen Verbindungen einher, welche üblicherweise nur durch den Hersteller der Funktionseinheit vorgenommen werden kann.

Hiervon ausgehend liegt der Erfindung die Aufgabe zugrunde, ein verbessertes Verfahren zum Konfigurieren einer Anzahl von Vorrichtungen zu einer Funktionseinheit sowie eine verbesserte Funktionseinheit zur Verfügung zu stellen, welche eine vereinfachte Konfiguration der Funktionseinheit sowie des Funktionsablaufs der Vorrichtungen der Funktionseinheit ermöglicht.

Dies wird erfindungsgemäß durch die Lehre der unabhängigen Ansprüche erreicht. Zu bevorzugende Weiterbildungen der Erfindung sind Gegenstand der Unteransprüche.

Zur Lösung der Aufgabe wird ein Verfahren zum Konfigurieren einer Anzahl von Vorrichtungen zu einer Funktionseinheit vorgeschlagen, wobei die Vorrichtungen vorgesehen sind, zumindest teilweise parallel und/ oder aufeinanderfolgend Teilaufgaben zum Verbinden von Bauteilen auszuführen. Das vorgeschlagene Verfahren weist folgende Schritte auf:
- Auswahl der für eine Ausführung der Teilaufgaben der Funktionseinheit erforderlichen Vorrichtungen, wobei jede Vorrichtung eine einheitlich ausgebildete Schnittstelle aufweist;
- mechanisches Anordnen der Vorrichtungen der Funktionseinheit abhängig von der Aufgabe der Funktionseinheit;
- Vorgeben des Funktionsablaufs der von den ausgewählten Vorrichtungen ausgeführten Teilaufgaben abhängig von der Aufgabe der Funktionseinheit;
- Herstellen einer signaltechnischen Verbindung der Vorrichtungen der Funktionseinheit abhängig vom vorgegebenen Funktionsablauf der von den ausgewählten Vorrichtungen ausgeführten Teilaufgaben anhand der an den Vorrichtungen angeordneten einheitlich ausgebildeten Schnittstellen.

Die mittels dem vorgeschlagenen Verfahren konfigurierbare Funktionseinheit weist eine Anzahl von Vorrichtungen auf, welche vorgesehen sind, zumindest teilweise parallel und/ oder aufeinanderfolgend Teilaufgaben zum Verbinden von Bauteilen ausführen. Beispiele für solche Vorrichtungen sind Schraub- oder Setzgeräte, Bunker, Partikelschleusen, Weichen, Schraubantriebe, Sensoren, Anzeigegeräte, Zähler oder Mensch-Maschine-Schnittstellen wie Anzeige- und/ oder Eingabeeinrichtungen, beispielsweise Touch-Displays. So kann ein Schraub- oder Setzgerät ein Verbindungselement in ein Bauteil einbringen, während ein weiteres Verbindungselement parallel und/ oder aufeinanderfolgend aus einem Bunker entnommen und diesem über eine Weiche und eine Zähleinrichtung zugeführt wird. Diese Vorrichtungen führen dabei Teilaufgaben beim Verbinden von Bauteilen aus. Eine Teilaufgabe einer Vorrichtung kann dabei eine oder mehrere Funktionen aufweisen, abhängig von der jeweiligen Vorrichtung und deren Funktionsumfang. Insbesondere weist jede der Vorrichtungen eine Signalverarbeitungseinrichtung auf, mittels welcher die Vorrichtung insbesondere zur Ausführung einer oder mehrerer Funktionen ansteuerbar ist. Entsprechend umfasst die Signalverarbeitungseinrichtung wenigstens einen Software-Baustein, der die Funktion und den Ablauf der Vorrichtung realisiert.

Das vorgeschlagene Verfahren weist mehrere Schritte auf, welche parallel und/ oder aufeinanderfolgend und insbesondere abhängig vom Aufbau der Funktionseinheit auch in einer anderen als der im Anspruch gegebenen Reihenfolge ausgeführt werden können.

In einem insbesondere ersten Schritt erfolgt eine Auswahl der für eine Ausführung der Teilaufgaben der Funktionseinheit erforderlichen Vorrichtungen. Die in diesem Schritt auswählbaren Vorrichtungen weisen jeweils eine Schnittstelle auf, über welche ein insbesondere digitaler Austausch von Informationen zwischen den Vorrichtungen und/ oder einer Steuereinrichtung in Form von physikalischen oder logischen Größen bzw. Signalen erfolgen kann. Die Schnittstellen der auswählbaren Vorrichtungen sind einheitlich ausgebildet. Entsprechend weist jede Schnittstelle eine gleiche Zahl an Ein- bzw. Ausgängen für eine vorbestimmte Art von physikalischen und/ oder logischen Größen bzw. Signalen insbesondere in einer jeweils gleichen Anordnung auf. Vereinfachend werden in der folgenden Beschreibung die an den Schnittstellen übertragenen Informationen in Form von insbesondere physikalischen und/ oder logischen Größen bzw. Signalen zusammengefasst als "Signale" bezeichnet. Dadurch, dass die Schnittstelle jeder auswählbaren Vorrichtung einheitlich ausgebildet ist, können die Vorrichtungen über ausgetauschte Signale unmittelbar miteinander kommunizieren bzw. zur Ausführung einer Funktion bzw. Teilaufgabe angesteuert bzw. getriggert werden und/ oder andere Vorrichtungen ansteuern bzw. triggern.

In einem weiteren Verfahrensschritt werden die Vorrichtungen der Funktionseinheit abhängig von der Aufgabe der Funktionseinheit mechanisch angeordnet. Ein mechanisches Anordnen der Vorrichtungen kann dabei räumlich und/ oder zeitlich getrennt von den weiteren Verfahrensschritten erfolgen. Insbesondere kann ein mechanisches Anordnen der Vorrichtungen vor oder nach einem Herstellen einer softwareseitigen signaltechnischen Verbindung zwischen den Vorrichtungen erfolgen. Die Vorrichtungen werden dabei insbesondere räumlich so angeordnet, dass diese ihre jeweiligen Teilaufgaben zum Verbinden von Bauteilen ausführen können und hierfür insbesondere auch Zugang zu wenigstens einem hierzu erforderlichen Bauteil-, Verbindungselement-, Stoff-, Energie- und /oder Signalfluss haben. Die Vorrichtungen können dabei bereits an ihrem Bestimmungsort als Funktionseinheit angeordnet oder an einem Konfigurationsort angeordnet werden, von welchem sie insbesondere später an ihren Bestimmungsort verbracht werden.

In einem weiteren Verfahrensschritt wird der Funktionsablauf der von den ausgewählten Vorrichtungen ausgeführten Teilaufgaben abhängig von der Aufgabe der Funktionseinheit vorgegeben. Insbesondere wird dabei der zeitliche Ablauf der Teilaufgaben einer Vorrichtung auf Funktionsebene bestimmt. Dies erfolgt insbesondere durch eine Definition der für eine Verrichtung einer Teilaufgabe durch eine Vorrichtung erforderlichen Signale, insbesondere in Verbindung mit der Auswahl der Sender bzw. Adressaten entsprechender Signale gemäß dem Funktionsablauf der Teilaufgaben der Funktionseinheit. Beispielsweise kann der Funktionsablauf der von den Vorrichtungen ausgeführten Teilaufgaben mittels einer Mensch-Maschine-Schnittstelle vorgegeben werden, welche insbesondere eine visuelle Auswahl und Anordnung der Teilaufgaben bzw. der Vorrichtungen, welche die Teilaufgaben ausführen, ermöglicht.

In einem weiteren Verfahrensschritt wird eine signaltechnische Verbindung der Vorrichtungen abhängig vom vorgegebenen Funktionsablauf der von den ausgewählten Vorrichtungen ausgeführten Teilaufgaben hergestellt. Dies erfolgt sowohl software- als auch hardwareseitig anhand der einheitlich ausgebildeten Schnittstelle, die jede der Vorrichtungen aufweist. Die zwischen den Schnittstellen übertragenen Signale sind dabei so definiert, dass die Vorrichtung ihre wenigstens eine Teilaufgabe zum Verbinden von Bauteilen basierend auf den über die einheitliche Schnittstelle erhaltenen Signalen ausführt und abhängig vom Funktionsablauf insbesondere vordefinierte Signale über die einheitliche Schnittstelle an wenigstens eine weitere Vorrichtung und/ oder an eine Steuereinrichtung sendet.

Das vorgeschlagene Verfahren ermöglicht eine flexible Vorgehensweise zum Konfigurieren einer Anzahl von Vorrichtungen zu einer Funktionseinheit, deren Vorrichtungen vorgesehen sind, entsprechend einem Funktionsablauf Teilaufgaben zum Verbinden von Bauteilen durchzuführen. Mit dem Verfahren können die eine einheitliche Schnittstelle aufweisenden Vorrichtungen in einfacher Weise signaltechnisch miteinander verbunden werden. Insbesondere ist das Verfahren auch so ausführbar, dass eine signaltechnische Verbindung auf Steuerungsebene und damit softwareseitig bereits herstellbar ist, bevor der Schritt des mechanischen Anordnens der Vorrichtungen der Funktionseinheit erfolgt. Dies ermöglicht ein flexibles und vereinfachtes Konfigurieren der Funktionseinheit. Insbesondere vereinfacht das vorgeschlagene Verfahren die softwareseitige Konfiguration, da Inkompatibilitäten zwischen auswählbaren Vorrichtungen bzw. deren Anordnung im Funktionsablauf frühzeitig erkennbar sind.

Bei einer Ausführungsform ist die einheitliche Schnittstelle jeder Vorrichtung zum Verarbeiten vorbestimmter Signalarten eingerichtet. Beispielsweise ist die einheitliche Schnittstelle ausgebildet, fünf unterschiedliche Signalarten zu Verarbeiten.

Bei einer Ausführung stellt ein erstes Signal ein Anforderungs-Signal dar, welches eine Anforderung eines Verbindungselements bei einer im Verfahrensablauf vorausgehenden Vorrichtung in der Transport-Kette der Funktionseinheit enthält.

Ein zweites Signal stellt ein Ladezustands-Signal dar, welches Informationen über den Ladezustand der (mit einem Verbindungselement) in der Transport-Kette enthält.

Ein drittes Signal stellt ein Förderanforderungs-Signal dar, welches eine Anforderung einer Förderung des Verbindungselements von der geladenen, im Verfahrensablauf vorausgehenden Vorrichtung in der Transport-Kette enthält.

Ein viertes Signal stellt ein Transport-Signal dar, welches Information über den aktiven Transport-Vorgang des Verbindungselements durch die im Verfahrensablauf vorausgehende Vorrichtung in der Transport-Kette enthält.

Ein fünftes Signal stellt ein Bestätigungs-Signal dar, welches eine Bestätigung des Eintreffens des Verbindungselements an der im Verfahrensablauf vorausgehenden Vorrichtung in der Transport-Kette enthält.

Die Signalarten dieser Ausführung bilden also eine Gruppe, welche ein Anforderungs-Signal, ein Ladezustands-Signal, ein Förderanforderungs-Signal, ein Transport-Signal und ein Bestätigungs-Signal umfasst. Die Gruppe von Signalarten anderer Ausführungen kann selbstverständlich insbesondere abhängig von der Funktionseinheit andere Signalarten umfassen.

Die Anforderungs-, Förderanforderungs- und Bestätigungs-Signale werden von der jeweiligen Vorrichtung an die vorhergehende Vorrichtung in der Transport-Kette gesendet, die Ladezustands- und Förder-Signale werden von der vorhergehenden Vorrichtung an die jeweils im Verfahren folgende Vorrichtung gesendet. Im Gegensatz dazu werden bei der Kommunikation einer Vorrichtung mit der im Verfahren folgenden Vorrichtung in der Transport-Kette die Ladezustands- und Förderanforderungs-Signale von der jeweiligen Vorrichtung an die im Verfahrensablauf folgende Vorrichtung gesendet, sowie die Anforderungs-, Förder- und Bestätigungs-Signale von der im Verfahrensablauf folgenden Vorrichtung an die im Verfahrensablauf vorhergehend aktive Vorrichtung gesendet.

Bei einer Ausführungsform des Verfahrens zum Konfigurieren einer Anzahl von Vorrichtungen zu einer Funktionseinheit erfolgt das Vorgeben des Funktionsablaufs der von den ausgewählten Vorrichtungen ausgeführten Teilaufgaben durch ein Auswählen und Anordnen der Vorrichtungen auf einer Anzeigeeinrichtung einer Mensch-Maschine-Schnittstelle. Bei einer Ausführung können die auswählbaren Vorrichtungen beispielsweise einem auf der Anzeigeeinrichtung dargestellten virtuellem Lager entnommen und beispielsweise entsprechend dem vorgesehenen Funktionsablauf und/ oder entsprechend der mechanischen Anordnung der Vorrichtungen arrangiert werden. Dies kann beispielsweise auf einem Touch-Display, auf welchem die Vorrichtungen in Form von Icons dargestellt werden, in einer Art "drag-and-drop"- und/ oder einer Verschiebe-Funktion erfolgen. Dabei kann der Funktionsablauf auf der Anzeigeeinrichtung beispielsweise in Form eines Ablaufdiagramms dargestellt werden, welches geeignet ist, einen insbesondere teilweise parallelen und/ oder aufeinanderfolgend vorgesehenen Funktionsablauf zu veranschaulichen. Beispielsweise kann dabei ein zeitlicher Ablauf mittels Pfeilen darstellbar sein.

Eine Ausführungsform des Verfahrens zum Konfigurieren einer Anzahl von Vorrichtungen zu einer Funktionseinheit weist als weiteren Schritt ein Prüfen der signaltechnischen Verbindung zwischen wenigstens zwei Vorrichtungen der Funktionseinheit anhand einer Simulation des vorgegebenen Funktionsablaufs der Teilaufgaben auf. Zum Durchführen einer solchen Simulation kann beispielsweise eine Teilaufgabe einer im Verfahrensablauf nachfolgenden Vorrichtung insbesondere durch eine Simulation wenigstens eines der zwischen den Schnittstellen übertragenen Signale ausgelöst und das Vorliegen einer hierauf folgenden Signals, insbesondere das Vorliegen eines Bestätigungs-Signals nach einem vorgegebenen Zeitintervall, wie beispielsweise nach 30 Sekunden, geprüft werden. Dabei kann der simulierte Funktionsablauf der Teilaufgaben visuell und/ oder anhand einer Ausgabe der dabei generierten Daten angezeigt werden. Insbesondere kann so die Kommunikation zwischen den wenigstens zwei Vorrichtungen oder beispielsweise einer Baugruppe der Funktionseinheit geprüft werden. Dadurch, dass die Prüfung dabei in Form einer Simulation erfolgt, besteht keine Gefahr einer Beschädigung einer Vorrichtung im Falle eines fehlerhaften Funktionsablaufs. Ein solches Prüfen der signaltechnischen Verbindung zwischen den Vorrichtungen bietet sich insbesondere vor einer Inbetriebnahme der Funktionseinheit oder einzelner Vorrichtungen bzw. Baugruppen an.

Eine Ausführungsform des Verfahrens zum Konfigurieren einer Anzahl von Vorrichtungen zu einer Funktionseinheit weist als weiteren Schritt ein Anpassen und/ oder Austauschen wenigstens eines Parameters oder Signals einer Schnittstelle zwischen wenigstens zwei Vorrichtungen der Funktionseinheit auf. Dieser Schritt wird insbesondere durch die signaltechnische Verbindung der Vorrichtungen über eine einheitliche Schnittstelle ermöglicht. So kann ein angepasster und/ oder ausgetauschter Parameter bzw. ein angepasstes und/ oder ausgetauschtes Signal von diesen wenigstens zwei Vorrichtungen verarbeitet werden, insbesondere ohne dass ein insbesondere programmiertechnisches Anpassen der Schnittstelle oder der Signalverarbeitung wenigstens einer der Vorrichtungen erforderlich ist. Insbesondere bietet sich nach einem Anpassen und/ oder Austauschen wenigstens eines Parameters bzw. Signals einer Schnittstelle ein Prüfen der signaltechnischen Verbindung zwischen wenigstens zwei Vorrichtungen der Funktionseinheit anhand einer Simulation des vorgegebenen Funktionsablaufs der Teilaufgaben an, um den Funktionsablauf bzw. die Kommunikation zwischen den wenigstens zwei Vorrichtungen bzw. der Funktionseinheit zu prüfen.

Eine Ausführungsform des Verfahrens zum Konfigurieren einer Anzahl von Vorrichtungen zu einer Funktionseinheit weist als weiteren Schritt ein Hinzufügen, Entfernen und/ oder Austauschen wenigstens einer Vorrichtung der Funktionseinheit auf. Dieser Schritt wird durch die signaltechnische Verbindung der Vorrichtungen über die einheitliche Schnittstelle vereinfacht. So kann eine Vorrichtung über diese Schnittstelle signaltechnisch ohne weitere Anpassung mit wenigstens einer weiteren Vorrichtung der Funktionseinheit verbunden werden, ohne dass eine insbesondere programmiertechnische Anpassung einer Schnittstelle oder der Signalverarbeitung der verbleibenden und/ oder der wenigstens einen hinzugefügten oder ausgetauschten Vorrichtungen erforderlich ist. Insbesondere bietet sich auch nach einem Hinzufügen, Entfernen und/ oder Austauschen wenigstens einer Vorrichtung der Funktionseinheit ein Prüfen der signaltechnischen Verbindung zwischen wenigstens zwei Vorrichtungen der Funktionseinheit anhand einer Simulation des vorgegebenen Funktionsablaufs der Teilaufgaben an, um die insbesondere weitere Kommunikation bzw. den Funktionsablauf zwischen den Vorrichtungen zu prüfen, deren Funktionsablauf in Verbindung mit der wenigstens einen hinzugefügten, entfernten und/ oder ausgetauschten Vorrichtung steht.

Eine Ausführungsform des Verfahrens zum Konfigurieren einer Anzahl von Vorrichtungen zu einer Funktionseinheit weist als weiteren Schritt ein Anpassen der Anordnung wenigstens einer ausgewählten Vorrichtung sowie des Funktionsablaufs der von der wenigstens einen Vorrichtung ausgeführten Teilaufgabe auf. Auch dieser Schritt wird durch die signaltechnische Verbindung der Vorrichtungen mittels einer einheitlichen Schnittstelle vereinfacht. So kann die signaltechnische Verbindung wenigstens einer Vorrichtung gelöst und an einer anderen Stelle im Funktionsablauf insbesondere ohne weitere Anpassung neu hergestellt werden, in dem Sinne, dass eine signaltechnische Verbindung der Vorrichtung mit den im geänderten Funktionsablauf benachbarten Vorrichtungen hergestellt wird, ohne dass eine insbesondere programmiertechnische Anpassung einer Schnittstelle oder der Signalverarbeitung der im Funktionsablauf der wenigstens einen Teilaufgabe vorhergehenden bzw. folgenden Vorrichtungen erforderlich ist. Insbesondere bietet sich auch nach einem Anpassen der Anordnung wenigstens einer ausgewählten Vorrichtung sowie des damit verbundenen Funktionsablaufs der wenigstens einen Teilaufgabe ein Prüfen der signaltechnischen Verbindung zwischen der anders angeordneten Vorrichtung der Funktionseinheit anhand einer Simulation des Funktionsablaufs der Teilaufgaben an.

In einem zweiten Aspekt wird zur Lösung der Aufgabe eine Funktionseinheit mit mehreren Vorrichtungen, welche zumindest teilweise parallel und/ oder aufeinanderfolgend zum Ausführen von Teilaufgaben zum Verbinden von Bauteilen vorgesehen sind, vorgeschlagen. Die Funktionseinheit weist eine Steuereinrichtung und eine Mensch-Maschine-Schnittstelle auf, und die Vorrichtungen weisen jeweils eine einheitlich ausgebildete Schnittstelle auf, welche eine Kommunikation zwischen den Vorrichtungen und/ oder der Steuereinrichtung ermöglicht. Mittels der Mensch-Maschine-Schnittstelle ist durch visuelle Auswahl und Anordnung der Vorrichtungen ein Funktionsablauf der Vorrichtungen vorgebbar und die Steuereinrichtung ist eingerichtet, eine signaltechnische Verbindung der Vorrichtungen entsprechend dem vorgegebenen Funktionsablauf beim Ausführen von Teilaufgaben zum Verbinden von Bauteilen herzustellen.

Die vorgeschlagene Funktionseinheit ist insbesondere mittels einem oder mehrerer Schritte des vorausgehend vorgeschlagenen Verfahrens zum Konfigurieren einer Anzahl von Vorrichtungen zu einer Funktionseinheit konfigurierbar. Gesichtspunkte des Verfahrens, welche die Ausgestaltung von Merkmalen oder Eigenschaften der Funktionseinheit bzw. deren Bezug zueinander beeinflussen, sind analog wie in der vorausgehenden Beschreibung des Verfahrens zu verstehen und werden daher in Verbindung mit der Funktionseinheit nicht weiter gesondert erläutert.

Die Funktionseinheit weist mehrere Vorrichtungen auf, welche zumindest teilweise parallel und/ oder aufeinanderfolgend zum Ausführen von Teilaufgaben zum Verbinden von Bauteilen zusammenwirken. Beispiele für solche Vorrichtungen sind Schraub- oder Setzgeräte, Bunker, Partikelschleusen, Weichen, Schraubantriebe, Sensoren, Anzeigegeräte, Zähler oder Mensch-Maschine-Schnittstellen wie Anzeige- und/ oder Eingabeeinrichtungen, wie beispielsweise Touch-Displays. So kann ein Schraub- oder Setzgerät ein Verbindungselement in ein Bauteil einbringen, während ein weiteres Verbindungselement parallel und/ oder aufeinanderfolgend aus einem Bunker entnommen und diesem über eine Weiche und eine Zähleinrichtung zugeführt wird.

Die Funktionseinrichtung weist eine Steuereinrichtung auf, welche mit den Vorrichtungen der Funktionseinheit signalverbunden ist, mittels welcher insbesondere mithilfe eines Steuerprogramms der Funktionsablauf von Vorrichtungen steuerbar ist, um eine Aufgabe der Funktionseinheit zum Verbinden von Bauteilen auszuführen. Ferner weist die Funktionseinheit eine Mensch-Maschine-Schnittstelle auf, welche insbesondere eine Anzeige- und/ oder Eingabeeinrichtung umfasst, wie beispielsweise ein Touch-Display oder dergleichen, mittels welchen insbesondere eine visuelle Auswahl und Anordnung von Vorrichtungen zum Vorgeben eines Funktionsablaufs mehrerer Vorrichtungen durchführbar ist.

Die Vorrichtungen der Funktionseinheit weisen jeweils eine einheitlich ausgebildete Schnittstelle auf, welche eine Kommunikation zwischen den Vorrichtungen und/ oder zwischen den Vorrichtungen und der Steuereinrichtung ermöglicht. Über die Schnittstelle kann ein insbesondere digitaler Austausch von Informationen zwischen den Vorrichtungen und/ oder der Steuereinrichtung in Form von physikalischen oder logischen Größen bzw. Signalen erfolgen. Wie bereits in Verbindung mit dem vorgeschlagenen Verfahren ausgeführt, weist jede Schnittstelle eine gleiche Zahl an Ein- bzw. Ausgängen für eine vorbestimmte Art von physikalischen und/ oder logischen Größen bzw. Signalen insbesondere in einer jeweils gleichen Anordnung auf. Vereinfachend werden die an den Schnittstellen übertragenen Informationen hierin zusammengefasst als "Signale" bezeichnet. Die einheitliche Ausbildung der Schnittstellen der mehreren Vorrichtungen der Funktionseinheit vereinfacht eine Kommunikation zwischen den Vorrichtungen und/ oder der Steuereinrichtung bzw. deren jeweilige Ansteuerung. Insbesondere weist jede der Vorrichtungen eine Signalverarbeitungseinrichtung auf, mittels welcher insbesondere die über die Schnittstelle erhaltenen Signale verarbeitbar sind und welche die Ausführung der wenigstens einen von der Vorrichtung auszuführenden Teilaufgabe steuert. Entsprechend umfasst die Signalverarbeitungseinrichtung wenigstens einen Software-Baustein, der die Funktion und den Ablauf der Vorrichtung realisiert.

Mittels der Mensch-Maschine-Schnittstelle ist durch visuelle Auswahl und Anordnung der Vorrichtungen ein Funktionsablauf der Vorrichtungen vorgebbar. Beispielsweise kann eine entsprechende visuelle Auswahl und Anordnung der Vorrichtungen gemäß dem vorgesehenen Funktionsablauf insbesondere mithilfe einer mit der Mensch-Maschine-Schnittstelle verbundenen Anzeigeeinrichtung in Verbindung mit einer Eingabeeinrichtung wie insbesondere einer Touch-Funktion erfolgen. Des Weiteren ist die Steuereinrichtung eingerichtet, eine insbesondere softwareseitige signaltechnische Verbindung der Vorrichtungen entsprechend dem mittels der Mensch-Maschine-Schnittstelle vorgegebenen Funktionsablauf beim Ausführen von Teilaufgaben zum Verbinden von Bauteilen herzustellen. Eine hardwareseitige signaltechnische Verbindung der Vorrichtungen kann - insbesondere abhängig von der Art der Signalübertragung (beispielsweise funk- oder mediengebunden) auch mechanisch bei der Montage der Funktionseinheit bzw. einer oder mehrerer Vorrichtungen der Funktionseinheit erfolgen. Insbesondere ist die Steuereinrichtung ausgebildet, eine signaltechnische Verbindung der Vorrichtungen anhand der einheitlich ausgebildeten Schnittstelle der Vorrichtungen herzustellen. Die zwischen den Schnittstellen übertragbaren Signale sind dabei so definiert, dass die wenigstens eine Teilaufgabe der Vorrichtung zum Verbinden von Bauteilen basierend auf den über die einheitliche Schnittstelle erhaltenen Signalen ausführbar ist und insbesondere vordefinierte Signale abhängig vom Funktionsablauf über die einheitliche Schnittstelle an wenigstens eine weitere Vorrichtung und/ oder an eine Steuereinrichtung sendbar sind.

Die vorgeschlagene Funktionseinheit ist aus einer Anzahl von Vorrichtungen flexibel zu einer Funktionseinheit konfiguriert, deren Vorrichtungen eingerichtet sind, entsprechend einem mittels einer Mensch-Maschine-Schnittstelle vorgebbaren Funktionsablauf Teilaufgaben zum Verbinden von Bauteilen durchzuführen, um die Aufgabe der Funktionseinheit auszuführen.

Bei einer Ausführungsform ist die Funktionseinheit ausgebildet, die signaltechnische Verbindung zwischen den Vorrichtungen anhand einer Simulation der Durchführung der Teilaufgaben zum Verbinden von Bauteilen durch die Vorrichtungen und die Durchführung der Teilaufgaben der Funktionseinheit zu prüfen. Bei einer solchen Prüfung kann der Ablauf der vorgesehenen Prozesse einschließlich der verwendeten Fertigungs- und Prozessparameter bzw. Prozesssignale überprüft werden, beispielsweise ohne bei einem Fehler insbesondere bei der Konfiguration der Funktionseinheit eine Beschädigung einer Vorrichtung zu riskieren.

Bei einer Ausführungsform der Funktionseinheit ist die Steuereinrichtung ausgebildet, wenigstens einen Parameter bzw. ein Signal wenigstens einer Schnittstelle zwischen wenigstens zwei Vorrichtungen anzupassen und/ oder auszutauschen. Ein Anpassen und/ oder Austauschen eines Parameters bzw. Signals kann beispielsweise bei einer Änderung der Aufgabe der Funktionseinheit vorteilhaft oder auch erforderlich sein, um die Ausführung der jeweiligen Teilaufgabe(n) der wenigstens zwei Vorrichtungen an die geänderte Aufgabe anzupassen. Beispielsweise kann ein Verbindungselement mit einer gegenüber dem vorherigen Ablauf längeren oder kürzeren Setztiefe vorgesehen werden, was sich beispielsweise unmittelbar auf die Teilaufgabe und Parameter einer Vorrichtung auswirkt, welche das Verbindungselement in ein Bauteil einbringt, und beispielsweise deren Zusammenwirken mit einer Vorrichtung zum Zuführen des Verbindungselements. Ein Anpassen und/ oder Austauschen eines Parameters bzw. Signals wenigstens einer Schnittstelle kann bei der vorgeschlagenen Funktionseinheit insbesondere mittels der Mensch-Maschine-Schnittstelle durchgeführt werden. Insbesondere ist die Funktionseinheit so eingerichtet, dass vor einer (Wieder-)Inbetriebnahme der Funktionseinheit die signaltechnische Verbindung mit der wenigstens einen angepassten bzw. ausgetauschten Schnittstelle insbesondere anhand einer Simulation prüfbar ist.

Bei einer Ausführungsform der Funktionseinheit ist die Steuereinrichtung ausgebildet, wenigstens eine Vorrichtung durch eine Änderung der Anordnung wenigstens einer Vorrichtung im Funktionsablauf mittels der Mensch-Maschine-Schnittstelle hinzuzufügen und/ oder auszutauschen. Aufgrund der einheitlichen Schnittstelle der Vorrichtungen der Funktionseinheit ist ein Hinzufügen oder Austauschen einer Vorrichtung signaltechnisch einfach umsetzbar. Die veränderte signaltechnische Verbindung zwischen den Vorrichtungen kann vorteilhaft durch ein Ändern des Funktionsablaufs der Funktionseinheit mithilfe der Mensch-Maschine-Schnittstelle, insbesondere mittels einer mit dieser verbundenen Anzeigeeinrichtung durchführbar sein. Ferner ist die Funktionseinheit insbesondere so eingerichtet, dass vor einer (Wieder-)Inbetriebnahme der Funktionseinheit die signaltechnische Verbindung mit der wenigstens einen hinzugefügten und/ oder ausgetauschten Vorrichtung insbesondere anhand einer Simulation prüfbar ist.

Bei einer Ausführungsform der Funktionseinheit ist die Steuereinrichtung ausgebildet, dass mittels einer Änderung der Anordnung wenigstens einer Vorrichtung im Funktionsablauf mittels der Mensch-Maschine-Schnittstelle der Funktionsablauf der Teilaufgaben der Funktionseinheit anpassbar ist. Ein solches Anpassen des Funktionsablaufs kann insbesondere visuell mittels einer Anzeigeeinrichtung der Mensch-Maschine-Schnittstelle der Funktionseinheit erfolgen. Insbesondere ist die Funktionseinheit dabei so eingerichtet, dass der geänderte Funktionsablauf der Teilaufgaben anhand einer Simulation wenigstens eines Teils der Aufgabe der Funktionseinheit prüfbar ist.

Bei einer Ausführungsform der Funktionseinheit weist die Steuereinrichtung eine Speichereinrichtung auf, welche eingerichtet ist, wenigstens die bei der signaltechnischen Verbindung der Vorrichtungen der Funktionseinheit und/ oder die im Betrieb der Steuereinrichtung anfallenden Daten zu speichern. Insbesondere kann die Speichereinrichtung eingerichtet sein, auch laufende Prozesse der Funktionseinheit bzw. der einzelnen Vorrichtungen, Fertigungsresultate, insbesondere an den Schnittstellen der Vorrichtungen übertragene Parameter bzw. Signale oder Systemmeldungen insbesondere auslesbar zu speichern.

Bei einer Ausführungsform der Funktionseinheit ist die Speichereinrichtung eingerichtet, die gespeicherten Daten über eine Datenschnittstelle zur Verfügung zu stellen. Eine solche Datenschnittstelle kann unmittelbar an der Funktionseinheit, wie insbesondere der Steuereinrichtung bzw. der Speichereinrichtung angeordnet und auslesbar sein. Alternativ oder zusätzlich kann eine solche Datenschnittstelle auch remote, insbesondere drahtlos oder über eine Webverbindung auslesbar ausgeführt sein.

Weitere Vorteile, Merkmale und Anwendungsmöglichkeiten der vorliegenden Erfindung ergeben sich aus der nachfolgenden Beschreibung in Zusammenhang mit den Figuren.

Es zeigen:
- Fig. 1:: eine beispielhafte Ausführungsform einer erfindungsgemäßen Funktionseinheit;
- Fig. 2:: eine beispielhafte Ausführung von über die einheitliche Schnittstelle übertragenen Signalen im zeitlichen Ablauf; und
- Fig. 3:: eine schematische Darstellung eines Ablaufdiagramms eines beispielhaften erfindungsgemäßen Verfahrens zum Konfigurieren einer Anzahl von Vorrichtungen zu einer Funktionseinheit.

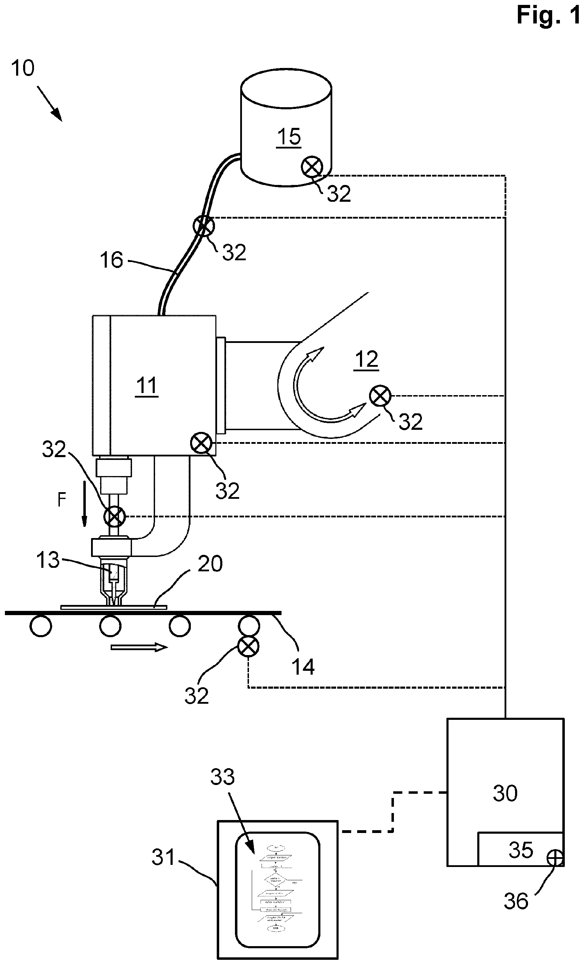

**Fig. 1** zeigt eine schematische Darstellung einer beispielhaften erfindungsgemäßen Funktionseinheit 10 mit mehreren Vorrichtungen 11, 12, 13, 14, 15, 16, welche zumindest teilweise parallel und/ oder aufeinanderfolgend zum Ausführen von Teilaufgaben zum Verbinden von Bauteilen 20 vorgesehen sind. Als Vorrichtungen der beispielhaften Funktionseinheit 10 sind in Fig. 1 ein Schraubwerkzeug 13, ein Antrieb 11, eine Positioniereinrichtung 12, eine Fördereinrichtung 14, ein Bunker 15 und eine Zuführeinrichtung 16 dargestellt. Ferner weist die Funktionseinheit 10 eine Steuereinrichtung 30 mit einer Mensch-Maschine-Schnittstelle 31 in Form eines Displays mit Touch-Funktion auf.

Jede der Vorrichtungen 11, 12, 13, 14, 15, 16 weist jeweils eine einheitlich ausgebildete Schnittstelle 32 auf, welche eine Kommunikation zwischen den Vorrichtungen 11, 12, 13, 14, 15, 16 und/ oder der Steuereinrichtung 30 ermöglicht. Mittels der Mensch-Maschine-Schnittstelle 32 ist durch visuelle Auswahl und Anordnung der Vorrichtungen 11, 12, 13, 14, 15, 16 auf dem Display der Mensch-Maschine-Schnittstelle 31 ein Funktionsablauf 33 der Vorrichtungen 11, 12, 13, 14, 15, 16 vorgebbar. Die Steuereinrichtung 30 ist eingerichtet, eine signaltechnische Verbindung der Vorrichtungen 11, 12, 13, 14, 15, 16 entsprechend dem vorgegebenen Funktionsablauf 33 beim Ausführen von Teilaufgaben zum Verbinden von Bauteilen 20 herzustellen. Die Steuereinrichtung 30 ist so ausgebildet, dass mittels einer Änderung der Anordnung wenigstens einer Vorrichtung 11, 12, 13, 14, 15, 16 mithilfe der Mensch-Maschine-Schnittstelle 31 der Funktionsablauf 33 der von wenigstens einer Vorrichtung 11, 12, 13, 14, 15, 16 der Funktionseinheit 10 ausgeführten Teilaufgaben anpassbar ist. Ferner weist die Steuereinrichtung 30 eine Speichereinrichtung 35 auf, welche eingerichtet ist, wenigstens die bei der signaltechnischen Verbindung der Vorrichtungen 11, 12, 13, 14, 15, 16 der Funktionseinheit 10 und/ oder die im Betrieb der Steuereinrichtung 30 anfallenden Daten zu speichern sowie eine Datenschnittstelle 36 auf, über welche in der Speichereinrichtung 35 gespeicherte Daten auslesbar sind.

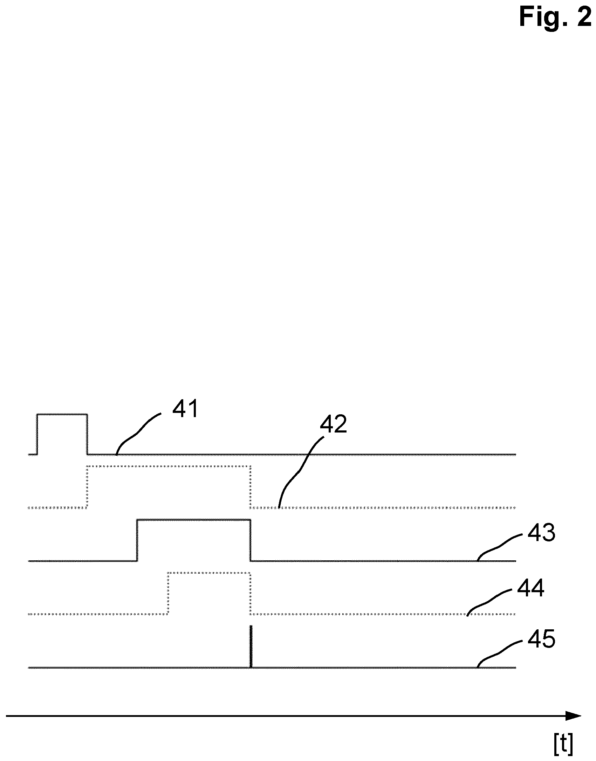

**Fig. 2** zeigt eine beispielhafte Ausführung von über die einheitliche Schnittstelle übertragenen Signalen im zeitlichen Ablauf. Bei der beispielhaft dargestellten Ausführung stellt ein erstes Signal 41 ein Anforderungs-Signal dar, welches eine Anforderung eines Verbindungselements bei einer im Verfahrensablauf vorausgehenden Vorrichtung 11, 12, 13, 14, 15, 16 in der Transport-Kette der Funktionseinheit 10 enthält. Ein zweites Signal 42 stellt ein Ladezustands-Signal dar, welches Informationen über den Ladezustand der (mit einem Verbindungselement) in der Transport-Kette enthält. Ein drittes Signal 43 stellt ein Förderanforderungs-Signal dar, welches eine Anforderung einer Förderung des Verbindungselements von der geladenen, im Verfahrensablauf vorausgehenden Vorrichtung 11, 12, 13, 14, 15, 16 in der Transport-Kette enthält. Ein viertes Signal 44 stellt ein Transport-Signal dar, welches Information über den aktiven Transport-Vorgang des Verbindungselements durch die im Verfahrensablauf vorausgehende Vorrichtung 11, 12, 13, 14, 15, 16 in der Transport-Kette enthält. Ein fünftes Signal 45 stellt ein Bestätigungs-Signal dar, welches eine Bestätigung des Eintreffens des Verbindungselements an der im Verfahrensablauf vorausgehenden Vorrichtung 11, 12, 13, 14, 15, 16 in der Transport-Kette enthält.

Die Anforderungs-, Förderanforderungs- und Bestätigungs-Signale 41, 43, 45 werden von einer jeweiligen Vorrichtung 11, 12, 13, 14, 15, 16 an die vorhergehende Vorrichtung 11, 12, 13, 14, 15, 16 in der Transport-Kette gesendet, die Ladezustands- und Förder-Signale werden von der vorhergehenden Vorrichtung 11, 12, 13, 14, 15, 16 an die jeweils im Verfahren folgende Vorrichtung 11, 12, 13, 14, 15, 16 gesendet. Im Gegensatz dazu werden bei der Kommunikation einer Vorrichtung 11, 12, 13, 14, 15, 16 mit der im Verfahren folgenden Vorrichtung 11, 12, 13, 14, 15, 16 in der Transport-Kette die Ladezustands- und Förderanforderungs-Signale von der jeweiligen Vorrichtung 11, 12, 13, 14, 15, 16 an die im Verfahrensablauf folgende Vorrichtung 11, 12, 13, 14, 15, 16 gesendet, sowie die Anforderungs-, Förder- und Bestätigungs-Signale von der im Verfahrensablauf folgenden Vorrichtung 11, 12, 13, 14, 15, 16 an die im Verfahrensablauf vorhergehend aktive Vorrichtung 11, 12, 13, 14, 15, 16 gesendet. Bei dem dargestellten Ausführungsbeispiel wird das Bestätigungssignal 45 gesendet, sobald das Eintreffen des Verbindungselements erkannt wird.

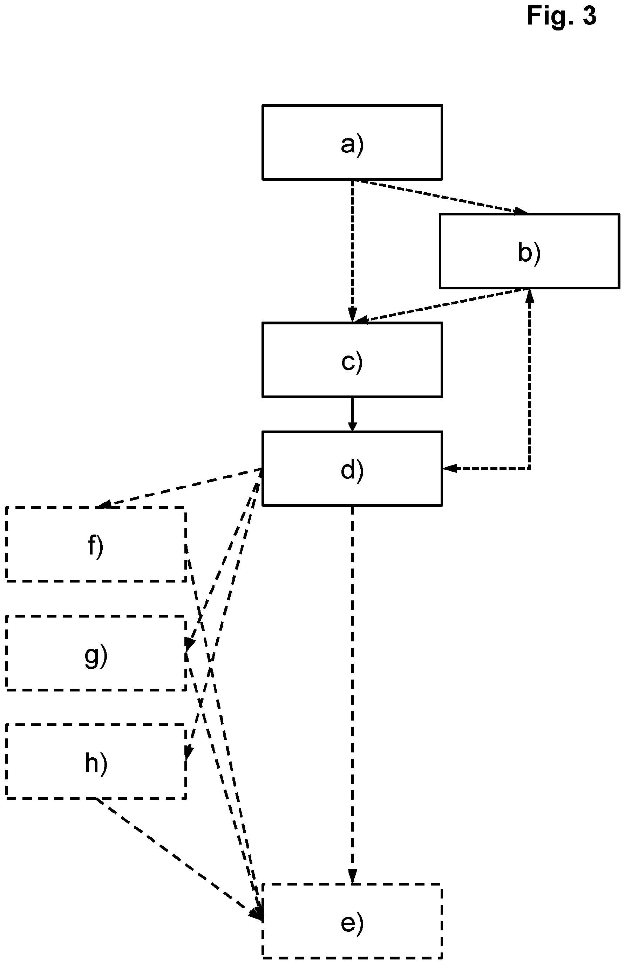

**Fig. 3** zeigt eine schematische Darstellung eines Ablaufdiagramms eines beispielhaften erfindungsgemäßen Verfahrens zum Konfigurieren einer Anzahl von Vorrichtungen 11, 12, 13, 14, 15, 16 zu einer Funktionseinheit 10, wobei die Vorrichtungen 11, 12, 13, 14, 15, 16 vorgesehen sind, zumindest teilweise parallel und/ oder aufeinanderfolgend Teilaufgaben zum Verbinden von Bauteilen 20 auszuführen. In einem Schritt a) werden die für eine Ausführung der Teilaufgaben der Funktionseinheit 10 erforderlichen Vorrichtungen 11, 12, 13, 14, 15, 16 ausgewählt, wobei jede Vorrichtung 11, 12, 13, 14, 15, 16 eine einheitlich ausgebildete Schnittstelle 32 aufweist. In einem Schritt b), der räumlich und zeitlich unabhängig von der Durchführung der Schritte a), c) und d) erfolgen kann werden die Vorrichtungen 11, 12, 13, 14, 15, 16 der Funktionseinheit 10 abhängig von der Aufgabe der Funktionseinheit 10 mechanisch angeordnet. In einem weiteren Schritt c) wird der Funktionsablauf 33 der von den ausgewählten Vorrichtungen 11, 12, 13, 14, 15, 16 ausgeführten Teilaufgaben abhängig von der Aufgabe der Funktionseinheit 10 vorgegeben und einem weiteren Schritt d) eine signaltechnische Verbindung der Vorrichtungen 11, 12, 13, 14, 15, 16 abhängig vom vorgegebenen Funktionsablauf 33 der von den ausgewählten Vorrichtungen 11, 12, 13, 14, 15, 16 ausgeführten Teilaufgaben anhand der einheitlich ausgebildeten Schnittstelle 32 hergestellt.

In einem optionalen Schritt e) erfolgt eine Prüfung der signaltechnischen Verbindung zwischen wenigstens zwei Vorrichtungen 11, 12, 13, 14, 15, 16 der Funktionseinheit 10 anhand einer Simulation des vorgegebenen Funktionsablaufs 33 der Teilaufgaben. In einem weiteren optionalen Schritt f) kann wenigstens ein Parameter einer Schnittstelle 32 zwischen wenigstens zwei Vorrichtungen 11, 12, 13, 14, 15, 16 der Funktionseinheit 10 angepasst und/ oder ausgetauscht werden. Nach diesem Schritt kann ein Schritt e) durchgeführt werden, in welchem die signaltechnischen Verbindung zwischen den wenigstens zwei Vorrichtungen 11, 12, 13, 14, 15, 16 der Funktionseinheit 10 mit angepasstem und/ oder ausgetauschten Parameter der Schnittstelle 32 anhand einer Simulation des vorgegebenen Funktionsablaufs 33 der Teilaufgaben geprüft wird.

Ein einem weiteren optionalen Schritt g) kann wenigstens eine Vorrichtung 11, 12, 13, 14, 15, 16 der Funktionseinheit 10 hinzugefügt, entfernt und/ oder ausgetauscht werden. Auch nach diesem Schritt kann ein Schritt e) durchgeführt werden, in welchem die signaltechnischen Verbindung zwischen den wenigstens zwei hinzugefügten, entfernten oder ausgetauschten Vorrichtungen 11, 12, 13, 14, 15, 16 der Funktionseinheit 10 anhand einer Simulation des vorgegebenen Funktionsablaufs 33 der Teilaufgaben geprüft wird.

Ein einem weiteren optionalen Schritt h) kann die Anordnung wenigstens einer ausgewählten Vorrichtung 11, 12, 13, 14, 15, 16 sowie des Funktionsablaufs 33 der von der wenigstens einen Vorrichtung 11, 12, 13, 14, 15, 16 ausgeführten Teilaufgabe angepasst werden. Auch nach diesem Schritt kann ein Schritt e) durchgeführt werden, in welchem die signaltechnische Verbindung der wenigstens einen Vorrichtung 11, 12, 13, 14, 15, 16 der Funktionseinheit 10 mit geänderter Anordnung anhand einer Simulation des vorgegebenen Funktionsablaufs 33 der Teilaufgaben geprüft wird.

## Patentansprüche

1. Verfahren zum Konfigurieren einer Anzahl von Vorrichtungen (11, 12, 13, 14, 15, 16) zu einer Funktionseinheit (10), wobei die Vorrichtungen (11, 12, 13, 14, 15, 16) vorgesehen sind, zumindest teilweise parallel und/ oder aufeinanderfolgend Teilaufgaben zum Verbinden von Bauteilen (20) auszuführen, mit den folgenden Schritten:
- Auswahl der für eine Ausführung der Teilaufgaben der Funktionseinheit (10) erforderlichen Vorrichtungen (11, 12, 13, 14, 15, 16), wobei jede Vorrichtung (11, 12, 13, 14, 15, 16) eine einheitlich ausgebildete Schnittstelle (32) aufweist;
- mechanisches Anordnen der Vorrichtungen (11, 12, 13, 14, 15, 16) der Funktionseinheit (10) abhängig von der Aufgabe der Funktionseinheit (10);
- Vorgeben des Funktionsablaufs (33) der von den ausgewählten Vorrichtungen (11, 12, 13, 14, 15, 16) ausgeführten Teilaufgaben abhängig von der Aufgabe der Funktionseinheit (10);
- Herstellen einer signaltechnischen Verbindung der Vorrichtungen (11, 12, 13, 14, 15, 16) der Funktionseinheit (10) abhängig vom vorgegebenen Funktionsablauf (33) der von den ausgewählten Vorrichtungen (11, 12, 13, 14, 15, 16) ausgeführten Teilaufgaben anhand der an den Vorrichtungen (11, 12, 13, 14, 15, 16) angeordneten einheitlich ausgebildeten Schnittstelle (32).

2. Verfahren zum Konfigurieren einer Anzahl von Vorrichtungen (11, 12, 13, 14, 15, 16) zu einer Funktionseinheit (10) nach Anspruch 1, **dadurch gekennzeichnet, dass** die einheitlich ausgebildete Schnittstelle (32) jeder Vorrichtung (11, 12, 13, 14, 15, 16) zum Verarbeiten vorbestimmter Signalarten (41, 42, 43, 44, 45) eingerichtet ist.

3. Verfahren zum Konfigurieren einer Anzahl von Vorrichtungen (11, 12, 13, 14, 15, 16) zu einer Funktionseinheit (10) nach Anspruch 1, **dadurch gekennzeichnet, dass** das Vorgeben des Funktionsablaufs (33) der von den ausgewählten Vorrichtungen (11, 12, 13, 14, 15, 16) ausgeführten Teilaufgaben durch Auswählen und Anordnen der Vorrichtungen (11, 12, 13, 14, 15, 16) auf einer Anzeigeeinrichtung einer Mensch-Maschine-Schnittstelle (31) erfolgt.

4. Verfahren zum Konfigurieren einer Anzahl von Vorrichtungen (11, 12, 13, 14, 15, 16) zu einer Funktionseinheit (10) nach einem der vorhergehenden Ansprüche, mit dem weiteren Schritt:
- Prüfen der signaltechnischen Verbindung zwischen wenigstens zwei Vorrichtungen (11, 12, 13, 14, 15, 16) der Funktionseinheit (10) anhand einer Simulation des vorgegebenen Funktionsablaufs (33) der Teilaufgaben.

5. Verfahren zum Konfigurieren einer Anzahl von Vorrichtungen (11, 12, 13, 14, 15, 16) zu einer Funktionseinheit (10) nach wenigstens einem der vorhergehenden Ansprüche, mit dem weiteren Schritt:
- Anpassen und/ oder Austauschen wenigstens eines Parameters einer Schnittstelle (32) zwischen wenigstens zwei Vorrichtungen (11, 12, 13, 14, 15, 16) der Funktionseinheit (10).

6. Verfahren zum Konfigurieren einer Anzahl von Vorrichtungen (11, 12, 13, 14, 15, 16) zu einer Funktionseinheit (10) nach wenigstens einem der vorhergehenden Ansprüche, mit dem weiteren Schritt:
- Hinzufügen, Entfernen und/ oder Austauschen wenigstens einer Vorrichtung (11, 12, 13, 14, 15, 16) der Funktionseinheit (10).

7. Verfahren zum Konfigurieren einer Anzahl von Vorrichtungen zu einer Funktionseinheit nach wenigstens einem der vorhergehenden Ansprüche, mit dem weiteren Schritt:
- Anpassen der Anordnung wenigstens einer ausgewählten Vorrichtung (11, 12, 13, 14, 15, 16) sowie des Funktionsablaufs (33) der von der wenigstens einen Vorrichtung (11, 12, 13, 14, 15, 16) ausgeführten Teilaufgaben der Funktionseinheit (10).

8. **Funktionseinheit** mit mehreren Vorrichtungen (11, 12, 13, 14, 15, 16), welche zumindest teilweise parallel und/ oder aufeinanderfolgend zum Ausführen von Teilaufgaben zum Verbinden von Bauteilen (20) vorgesehen sind, mit einer Steuereinrichtung (30) und einer Mensch-Maschine-Schnittstelle (31), **dadurch gekennzeichnet, dass** die Vorrichtungen (11, 12, 13, 14, 15, 16) jeweils eine einheitlich ausgebildete Schnittstelle (32) aufweisen, welche eine Kommunikation zwischen den Vorrichtungen (11, 12, 13, 14, 15, 16) und/ oder der Steuereinrichtung (30) ermöglicht, wobei mittels der Mensch-Maschine-Schnittstelle (31) durch Auswahl und Anordnung der Vorrichtungen (11, 12, 13, 14, 15, 16) mittels der Mensch-Maschine-Schnittstelle (31) ein Funktionsablauf (33) der Vorrichtungen (11, 12, 13, 14, 15, 16) vorgebbar ist und die Steuereinrichtung (30) eingerichtet ist, eine signaltechnische Verbindung der Vorrichtungen (11, 12, 13, 14, 15, 16) entsprechend dem vorgegebenen Funktionsablauf (33) für das Ausführen von Teilaufgaben zum Verbinden von Bauteilen (20) herzustellen.

9. Funktionseinheit nach Anspruch 8, **dadurch gekennzeichnet, dass** die einheitlich ausgebildete Schnittstelle (32) jeder Vorrichtung (11, 12, 13, 14, 15, 16) zum Verarbeiten vorbestimmter Signalarten (414, 42, 43, 44, 45) eingerichtet ist.

10. Funktionseinheit nach wenigstens einem der Ansprüche 8 oder 9, **dadurch gekennzeichnet, dass** die Steuereinrichtung (30) ausgebildet ist, die signaltechnische Verbindung zwischen den Vorrichtungen (11, 12, 13, 14, 15, 16) anhand einer Simulation der Durchführung der Teilaufgaben zum Verbinden von Bauteilen (20) durch die Vorrichtungen (11, 12, 13, 14, 15, 16) und damit insbesondere die Durchführung der Teilaufgaben der Funktionseinheit (10) zu prüfen.

11. Funktionseinheit nach wenigstens einem der Ansprüche 8 bis 10, **dadurch gekennzeichnet, dass** die Steuereinrichtung (30) ausgebildet ist, wenigstens einen Parameter wenigstens einer Schnittstelle (32) zwischen wenigstens zwei Vorrichtungen (11, 12, 13, 14, 15, 16) anzupassen und/ oder auszutauschen.

12. Funktionseinheit nach wenigstens einem der Ansprüche 8 bis 11, **dadurch gekennzeichnet, dass** die Steuereinrichtung (30) ausgebildet ist, wenigstens eine Vorrichtung (11, 12, 13, 14, 15, 16) durch eine Änderung der Anordnung wenigstens einer Vorrichtung (11, 12, 13, 14, 15, 16) im Funktionsablauf (33) mittels der Mensch-Maschine-Schnittstelle (31) hinzuzufügen und/ oder auszutauschen.

13. Funktionseinheit nach wenigstens einem der Ansprüche 8 bis 12, **dadurch gekennzeichnet, dass** die Steuereinrichtung (30) ausgebildet ist, mittels einer Änderung der Anordnung wenigstens einer Vorrichtung (11, 12, 13, 14, 15, 16) im Funktionsablauf (33) mithilfe der Mensch-Maschine-Schnittstelle (31) den Funktionsablauf (33) der Teilaufgaben der Funktionseinheit (10) anzupassen.

14. Funktionseinheit nach wenigstens einem der Ansprüche 8 bis 13, **dadurch gekennzeichnet, dass** die Steuereinrichtung (30) eine Speichereinrichtung (35) aufweist, welche eingerichtet ist, wenigstens die bei der signaltechnischen Verbindung der Vorrichtungen (11, 12, 13, 14, 15, 16) der Funktionseinheit (10) und/ oder die im Betrieb der Steuereinrichtung (30) anfallenden Daten zu speichern.

15. Funktionseinheit nach Anspruch 14, **dadurch gekennzeichnet, dass** die Speichereinrichtung (35) eingerichtet ist, die gespeicherten Daten über eine Datenschnittstelle (36) zur Verfügung zu stellen.
